(19) Europäisches Patentamt
European Patent Office
Office européen des brevets

(11) Veröffentlichungsnummer: **0 089 654**
**B1**

(12) # EUROPÄISCHE PATENTSCHRIFT

(45) Veröffentlichungstag der Patentschrift: **21.11.85**

(51) Int. Cl.⁴: **C 07 F 9/38**, C 08 F 30/02

(21) Anmeldenummer: **83102735.4**

(22) Anmeldetag: **19.03.83**

(54) **2-Acrylamido-2-methyl-propanphosphonsäure und ihre Salze, Verfahren zu deren Herstellung.**

(30) Priorität: **24.03.82 DE 3210775**

(43) Veröffentlichungstag der Anmeldung: **28.09.83 Patentblatt 83/39**

(45) Bekanntmachung des Hinweises auf die Patenterteilung: **21.11.85 Patentblatt 85/47**

(84) Benannte Vertragsstaaten: **AT BE CH DE FR GB IT LI NL SE**

(56) Entgegenhaltungen:
**EP-A- 0 010 335**
**DE-A- 2 052 568**
**DE-A- 2 217 746**
**US-A- 3 763 108**
**CHEMICAL ABSTRACTS, Band 81, Nr. 24, 16. Dezember 1974, Seite 35, Nr. 153194p, Columbus Ohio (USA); N.N. KUZNETSOVA et al.: "Synthesis of ion exchangers containing phosphonic acid groups".**

(73) Patentinhaber: **HOECHST AKTIENGESELLSCHAFT**
**Postfach 80 03 20**
**D-6230 Frankfurt am Main 80 (DE)**

(72) Erfinder: **Finke, Manfred, Dr.**
**Behringstrasse 25**
**D-6233 Kelkheim (Taunus) (DE)**
Erfinder: **Rupp, Walter, Dr.**
**Am Eichkopf 6**
**D-6240 Königstein/Taunus (DE)**

**EP 0 089 654 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Acrylamidoalkan-Sulfonsäuren und -Phosphonsäuren sind bereits bekannt (EP-PS 10 335). Da Interesse an ähnlichen polymerisierbaren Phosphonsäuren mit entsprechenden bzw. erweiterten anwendungstechnischen Eigenschaften, insbesondere einer erhöhten Hydrolysestabilität der Amidbindung besteht, wurde die 2-Acrylamido-2-methyl-propanphosphonsäure hergestellt, die noch nicht bekannt war.

Gegenstand der Erfindung sind 2-Acrylamido-2-methyl-propanphosphonsäure der Formel

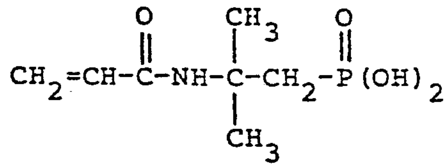

(I)

und deren Salze.

Die 2-Acrylamido-2-methyl-propanphosphonsäure läßt sich nach dem Prinzip der « Ritter-Reaktion » aus Acrylnitril und 2-Methylprop-1-en-1-phosphonsäure oder der isomeren 2-Methylprop-2-en-1-phosphonsäure wie auch aus Gemischen der beiden Phosphonsäuren in Gegenwart starker Säuren wie z. B. $H_2SO_4$, $H_3PO_4$, $HClO_4$, HF nach folgendem Reaktionsschema herstellen :

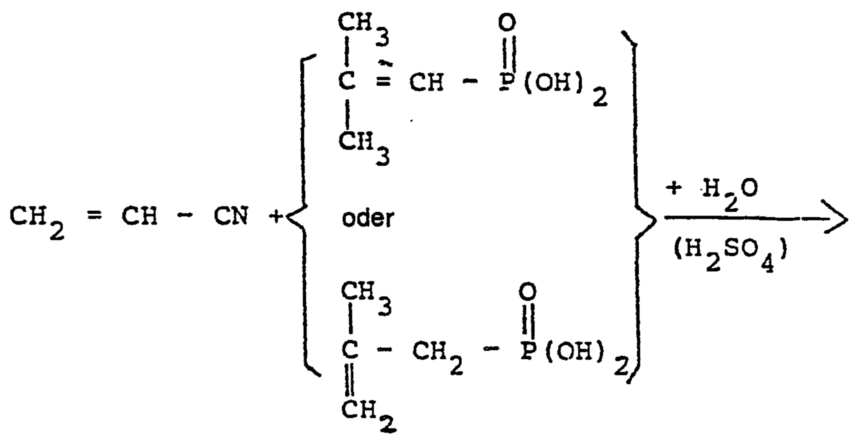


(I)

Die dabei verwendeten 2-Methyl-prop-1-en bzw. 2-Methyl-prop-2-en-1-phosphonsäuren lassen sich durch Hydrolyse der entsprechenden Phosphonsäuredichloride bequem herstellen. Diese 2-Methylpropen-1-phosphonsäurendichloride sind bereits ausführlich in der Literatur beschrieben [U.S. Patent 2 471 472 ; L. Maier, Phosphorus *5*, 223 (1975)].

Die Umsetzung des Isomerengemisches der 2-Methyl-propen-1-phosphonsäuren mit Acrylnitril erfolgt etwa im Molverhältnis 1 : 1. Ein zusätzliches Lösungsmittel ist nicht notwendig, jedoch dient ein Überschuß an der für die Umsetzung erforderlichen starken Mineralsäure ggfs. gleichzeitig als Lösungsmittel.

Die Reaktionstemperaturen betragen + 10° bis 90 °C, bevorzugt werden die Temperaturen während der Reaktionszeit von etwa Raumtemperatur auf etwa 60-70 °C gegen Ende zu erhöht. Die Reaktionszeit beträgt 1 h bis mehre Tage, vorzugsweise 12-14 Stunden.

Als starke Mineralsäuren kommen die bereits genannten und sulfonsäuregruppenhaltige Ionenaustauscher in Frage, meist in wasserhaltiger Form ; bevorzugt wird konz. Schwefelsäure verwendet, die das für die Reaktion nötige eine Äquivalent Wasser enthält. Die Mineralsäure selbst wird in mindestens äquimolarer Menge zu den Ausgangsverbindungen eingesetzt.

Die Salze der Phosphonsäure I werden nach üblichen Verfahren z. B. durch Umsetzung mit äquivalenten Mengen eines Metallhydroxids oder Carbonats aus wäßriger oder alkoholischer Lösung hergestellt.

Als Metallhydroxide kommen Alkali-, Erdalkali-, Zink-, Aluminium- oder Eisenhydroxide, insbesondere Natrium- und Kaliumhydroxid oder auch gegebenenfalls durch ($C_1$-$C_4$)-Alkyl substituierte Ammoniumhydroxide, insbesondere Ammoniumhydroxid in Frage.

Als erfindungsgemäße Salze der Verbindungen 1 sind beispielsweise folgende zu nennen :

Mononatriumsalz, Monokaliumsalz, Monolithiumsalz, Monoammoniumsalz, Magnesiumsalz, Calciumsalz, Bariumsalz, Aluminiumsalz, Zinksalz, Eisensalz, Dinatriumsalz, Dikaliumsalz.

Die Verbindung der Formel I und ihre Salze besitzen wertvolle Eigenschaften als Monomere zur Herstellung von Copolymeren. So weisen Copolymere aus 2-Acrylamido-2-methylpropanphosphonsäure mit Acrylnitril eine verminderte Entflammbarkeit auf. Copolymere mit Acrylamid können als Färbereihilfsmittel und Copolymere mit Acrylsäure als Scale-Inhibitoren verwendet werden.

Beispiel 1

1 041 g (5 mol) $PCl_5$ werden in 2,5 l wasserfreiem Toluol suspendiert und bei 10-15 °C 281 g (5 mol) Isobuten eingeleitet. Man rührt 30 min. bei 15 °C nach und leitet anschließend bei 10-15 °C so lange $SO_2$ ein, bis eine klare Lösung entstanden ist.

Toluol und $SOCl_2$ werden abdestilliert. Zur Abspaltung des chlorwasserstoffs wird der Rückstand 8 h unter Zusatz von 3 g Triphenylphosphan bei 270 mbar auf 180 °C erhitzt.

Die Destillation liefert 550 g eines Gemisches der isomeren 2-Methyl-propen-phosphonsäuredichloride. $Kp_{16mbar}$ = 90-93 °C. Ausbeute : 64 %.

173 g (1 mol) 2-Methylpropen-phosphonsäuredichlorid werden bei 20 °C in 200 ml Wasser getropft. Anschließend wird im Vakuum eingedampft und mit Toluol im Vakuum azeotrop entwässert. Das Toluol wird unter vermindertem Druck abdestilliert und die verbleibende freie Phosphonsäure mit 53.5 g (1 mol) Acrylnitril vermischt. Zu dieser Mischung werden bei 25-30 °C 104 g (1 mol) 96 %ige Schwefelsäure zugetropft. Nach 24 h wird die Reaktionsmischung mit 100 g Eis versetzt und die Schwefelsäure mit 80 g NaOH in 200 ml Wasser neutralisiert. Man dampft im Vakuum bis zur Trockene ein, extrahiert den Salzrückstand mit iso-Butanol, engt ein und fällt die Phosphonsäure I mit Aceton aus.

Ausbeute : 87 g (42 % der Theorie).

Fp. : 148-150 °C.

Beispiel 2

In einem Reaktionsgefäß (Volumen : 2 Ltr.) mit Rührer, Rückflußkühler, Gaseinleitungsrohr und elektrisch beheiztem Wasserbad werden 500 ml entionisiertes Wasser vorgelegt und unter Rühren ein Einleiten von Stickstoff 70 g Acrylamid und 10 g 2-Acrylamido-2-methylpropanphosphonsäuren aufgelöst.

Es werden noch 5 ml Isopropanol zugegeben und dann die Temperatur im Kolben auf 70 °C gebracht. Nun wird eine Lösung von 0.25 g Ammoniumperoxodisulfat in 10 ml Wasser im Verlauf von 10 min. zugetropft, wobei die Temperatur des Reaktionsgemisches auf 78 °C ansteigt. Nach Absinken der Temperatur wird noch 2 Stunden bei 80 °C Badtemperatur nachgerührt. Man erhält eine klare viskose Lösung mit pH 2.1 und einer Brookfield-Viskosität von 14 383 cp.

Ein Gewebe bestehend aus 50 % Polyester und 50 % Baumwolle wird auf einem Foulard mit einer Flottenaufnahme von 60 % mit einer Flotte bestehend aus

15 g Farbstoff C.I. Disperse Red 90
15 g Farbstoff C.I. Vat Red 51
10 g der gemäß obiger Vorschrift hergestellten Polymerlösung
460 g Wasser

imprägniert und auf einem Spannrahmen getrocknet. Man erhält eine Imprägnierung von höchster Übereinstimmung der Farbtiefe auf der Ober- und Unterseite des Gewebes.

Beispiel 3

Ein Copolymerisat aus 50 Gew.-Teilen 2-Acrylamido-2-methylpropanphosphonsäure und 50 Gew.-Teilen Acrylsäure wurde durch radikalisch initiierte Lösungspolymerisation in einem Wasser/Isopropanol-Gemisch bei 85 °C hergestellt.

Das resultierende Copolymerisat mit einem k-Wert von 23 (nach Fikentscher) wurde gemäß NACE-Standard TM-03-74 (NACE = National Association of Corrosion Engineers 1440 South Creek, Houston, TX) als Scale Inhibitor zur Verhinderung von Calciumsulfat- und Calciumcarbonat-Ausfällungen in wäßrigen Lösungen geprüft.

Bei Zusatz von 10 ppm Polymer gemäß Testanordnung wurde ein handelsübliches Produkt der Bezeichnung ®ACRYLRON A 002 der Firma PROTEX gegen ein erfindungsgemäßes Copolymerisat oben genannter Zusammensetzung geprüft.

| | Copolymer aus I + Acrylsäure | ®Acrylron A 002 |
|---|---|---|
| Ca-Sulfat Retentionswert | 5 120 mg/l | 3 833 mg/l |
| Ca-Carbonat Retentionswert | 3 819 mg/l | 2 965 mg/l |

Beispiel 4

500 g (2,89 mol) 2-Methyl-propen-phosphonsäuredichlorid (Isomerengemisch : hergestellt wie in

Beispiel 1) werden bei 20 °C mit 231 g (5,78 mol) Natriumhydroxid in 600 ml Wasser hydrolysiert und die Mischung im Vakuum vollständig eingedampft. Man gibt 1 000 ml Aceton zu, filtriert Natriumchlorid ab und wäscht mit 2 × 500 ml Aceton nach. Das Lösemittel wird abdestilliert und der Rückstand im Hochvakuum bei 50 °C vollständig getrocknet. Man erhält 388 g (98,5 % d. Th.) 2-Methyl-propen-phosphonsäure (Isomerengemisch).

388 g (2,85 mol) 2-Methyl-propen-phosphonsäure (Isomerengemisch) werden in 166 g (3,13 mol) Acrylnitril (10 % Überschuß) suspendiert, 3 g Phenothiazin zugegeben und unter Eiskühlung eine Mischung aus 288 g (2,85 mol) Schwefelsäure (97 %ig) und 51 g (2,85 mol) Wasser zugetropft. Man hält die Mischung zunächst 16 h bei 25°-30 °C, heizt im Verlauf von 4 h auf 60 °C und behält diese Temperatur weitere 16 h bei.

Überschüssiges Acrylnitril wird im Vakuum abdestilliert, die sehr zähe Reaktionsmasse in 2 000 ml Wasser aufgelöst und 285 g (2,85 mol) Calciumcarbonat zugegeben.

Man filtriert, wäscht mit 2 × 500 ml Wasser nach und dampft das Filtrat vollständig ein.

Der Rückstand wird mit Aceton nachgewaschen.

Man erhält 486 g (79 % d. Th.) 2-(N-Acrylamido)-2-methyl-propan-phosphonsäure als weißes Pulver. Fp. : 148-150 °C.

**Patentansprüche** (für die Vertragsstaaten : BE, CH, DE, FR, GB, IT, LI, NL, SE)

1. 2-Acrylamido-2-methyl-propanphosphonsäure der Formel

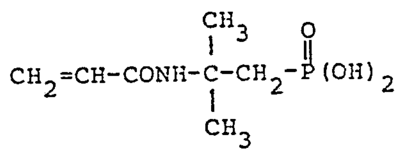

und ihre Salze.

2. Verfahren zur Herstellung der 2-Acrylamido-2-methyl-propanphosphonsäure, dadurch gekennzeichnet, daß man 2-Methylprop-1-en-1-phosphonsäure oder 2-Methylprop-2-en-1-phosphonsäure oder Gemische dieser Säuren mit Acrylnitril in Gegenwart einer mindestens äquimolaren Menge einer starken Säure umsetzt.

**Patentanspruch** (für den Vertragsstaat AT)

Verfahren zur Herstellung der 2-Acrylamido-2-methyl-propanphosphonsäure, dadurch gekennzeichnet, daß man 2-Methylprop-1-en-1-phosphonsäure oder 2-Methylprop-2-en-1-phosphonsäure oder Gemische dieser Säuren mit Acrylnitril in Gegenwart einer mindestens äquimolaren Menge einer starken Säure umsetzt.

**Claims** (for the Contracting States : BE, CH, DE, FR, GB, IT, LI, NL, SE)

1. 2-Acrylamido-2-methylpropanephosphonic acid of the formula

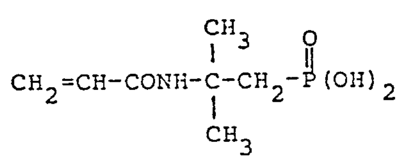

and the salts thereof.

2. A process for the preparation of 2-acrylamido-2-methyl-propanephosphonic acid, which comprises reacting 2-methylprop-1-ene-1-phosphonic acid or 2-methylprop-2-ene-1-phosphonic acid or mixtures of these acids with acrylonitrile in the presence of an at least equimolar amount of a strong acid.

**Claim** (for the Contracting State AT)

A process for the preparation of 2-acrylamido-2-methyl-propanephosphonic acid, which comprises reacting 2-methylprop-1-ene-1-phosphonic acid or 2-methylprop-2-ene-1-phosphonic acid or mixtures of these acids with acrylonitrile in the presence of an at least equimolar amount of a strong acid.

**Revendications** (pour les Etats contractants : BE, CH, DE, FR, GB, IT, LI, NL, SE)

1. Acide acryloylamino-2 méthyl-2 propanephosphonique, corps qui répond à la formule suivante :

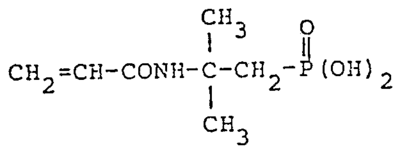

ainsi que ses sels.

2. Procédé de préparation de l'acide acryloylamino-2 méthyl-2 propane-phosphonique, procédé caractérisé en ce qu'on fait réagir l'acide méthyl-2 propène-1 phosphonique-1 ou l'acide méthyl-2 propène-2 phosphonique-1, ou des mélanges de ces acides, avec l'acrylonitrile en présence d'une quantité au moins équimolaire d'un acide fort.

**Revendication** (pour l'Etat contractant AT)

Procédé de préparation de l'acide acryloylamino-2 méthyl-2 propane-phosphonique, procédé caractérisé en ce qu'on fait réagir l'acide méthyl-2 propène-1 phosphonique-1 ou l'acide méthyl-2 propène-2 phosphonique-1, ou des mélanges de ces acides, avec l'acrylonitrile en présence d'une quantité au moins équimolaire d'un acide fort.